# EUROPÄISCHE PATENTSCHRIFT

(11) **EP 0 825 067 B1**
(45) Veröffentlichungstag und Bekanntmachung des Hinweises auf die Patenterteilung: **03.09.2003**
(21) Anmeldenummer: 97112785.7
(22) Anmeldetag: 25.07.1997
(51) Int. Cl.: B60R 16/02, B60R 11/00

(54) **Vorrichtung zur fahrzeugfesten Halterung von Steuergeräten in einem Kraftfahrzeug**
Device for rigidly fixing control units in a motor vehicle
Dispositif de fixation pour unités de commande dans un véhicule automobile

(30) Priorität: 16.08.1996 DE 19632942
(43) Veröffentlichungstag der Anmeldung: 25.02.1998
(73) Patentinhaber: DaimlerChrysler AG, 70567 Stuttgart (DE)
(72) Erfinder: Krieg, Karl-Heinz, 73268 Erkenbrechtsweiler (DE); Krug, Martin, 76189 Karlsruhe (DE)

(56) Entgegenhaltungen:
- EP-A- 0 448 783
- DE-A- 3 928 138
- DE-A- 4 313 782
- DE-A- 19 524 165
- FR-A- 2 378 433
- FR-A- 2 687 887
- US-A- 4 847 733

## Beschreibung

Die Erfindung betrifft eine Vorrichtung zur fahrzeugfesten Halterung von Steuergeräten in einem Kraftfahrzeug mit einem Trägerbauteil, das mit Aufnahmebereichen zur Positionierung und Festlegung mehrerer unterschiedlicher Steuergeräte versehen ist.

Aus der DE 43 13 782 A1 ist eine Vorrichtung zur fahrzeugfesten Halterung von Steuergeräten bekannt, die ein Trägerbauteil zur Halterung elektronischer und elektrotechnischer Steuergeräte aufweist. Das Trägerbauteil weist Kühlrippen auf, die eine verbesserte Wärmeabfuhr der Gehäuse der Steuergeräte ermöglichen. Zur Halterung mehrerer Steuergeräte werden diese stapelförmig an dem Trägerbauteil gehalten. Das Trägerbauteil ist individuell für die jeweils vorgesehene Anzahl von Steuergeräten ausgelegt. Eine einfache Umrüstung des Trägerbauteiles für die Aufnahme zusätzlicher oder unterschiedlich gestalteter Steuergeräte ist nicht möglich.

DE 195 24 165 A1 ist eine Stirnwand einer Fahrgastzelle in einem Kraftwagen entnehmbar, welche Durchlässe für Einbaumodule aufweist. Diese Einbaumodule können ein Bremsgerät oder elektronische Steuergeräte enthalten.

Sie offenbart eine Vorrichtung mit Steuergeräten zur fahrzeugfesten Halterung dieser Steuergeräte in einem Kraftfahrzeug und mit einem Trägerbauteil, das mit Aufnahmebereichen zur Positionierung und Festlegung mehrerer unterschiedlicher Steuergeräte versehen ist, wobei
- das Trägerbauteil als im wesentlichen flächig gestaltetes, plattenförmiges Bauteil ausgebildet ist und
- die Aufnahmebereiche für die Steuergeräte sowohl auf einer Oberseite als auch auf einer Unterseite des Trägerbauteiles jeweils nebeneinander derart angeordnet sind, dass jeder Aufnahmebereich für ein Steuergerät unabhängig von der Anordnung der weiteren Steuergeräte zugänglich ist.

Die DE 39 28 138 A1 offenbart ein Trägerbauteil in Form eines Blechstanzteiles, das plattenförmig und einstückig gestaltet ist. Das Blechstanzteil weist Aufnahmebereiche zur Festlegung eines Steckers einerseits und einer Buchse andererseits an dem Blechstanzteil auf.

Aufgabe der Erfindung ist es, eine Vorrichtung der eingangs genannten Art zu schaffen, die die einfache Montierbarkeit und Umrüstbarkeit von Steuergeräten unterschiedlicher Art gewährleistet.

Diese Aufgabe wird durch die Merkmale des Anspruchs 1 gelöst. Durch die im wesentlichen flächige Gestaltung des Trägerbauteils als Blechstanzteil und durch die Anordnung der Aufnahmebereiche auf dem Blechstanzteil nebeneinander wird eine einfache Montage und Demontage der Steuergeräte ermöglicht, da jeder Aufnahmebereich für ein entsprechendes Steuergerät unabhängig von der Anordnung der weiteren Steuergeräte in einfacher Weise zugänglich ist. Die Anordnung der Aufnahmebereiche auf dem Blechstanzteil nebeneinander gestattet auch die einfache fertigungstechnische Bearbeitung des Blechstanzteiles je nach den Anforderungen für etwaige zusätzliche oder anders gestaltete Aufnahmebereiche, wodurch in einfacher Weise eine schnelle Umrüstung für die Anordnung anderer oder zusätzlicher Steuergeräte ermöglicht wird. Sowohl die auf der Oberseite als auch die auf der Unterseite des Blechstanzteiles angeordneten Steuergeräte sind einfach zugänglich. Das Trägerbauteil kann einschließlich der jeweils vorgesehenen Steuergeräte außerhalb des Kraftfahrzeugs vormontiert und als komplette Vormontageeinheit ins Kraftfahrzeug eingesetzt werden. Das Trägerbauteil stellt somit von der Funktion her eine Grundplatte dar, die eine einfache Variation und Umrüstung auf die jeweiligen Anforderungen ermöglicht. Durch die erfindungsgemäße Lösung ist das Trägerbauteil insbesondere zur Halterung von unterschiedlich dimensionerten Steuergeräten für Funktionsanordnungen geeignet, die für das Kraftfahrzeug als Sonderausstattung auswählbar sind. Durch das Trägerbauteil ist eine individuelle Anpassung an die jeweiligen Kundenwünsche möglich, ohne daß jeweils separate Halterungen hergestellt werden müssen.

In Ausgestaltung der Erfindung ist das Blechstanzteil an einem fahrzeugfesten Karosserieteil in horizontaler Ausrichtung festgelegt. Dadurch wird eine einfache Zugänglichkeit der Steuergeräte auch im eingebauten Zustand des Blechstanzteiles ermöglicht.

In weiterer Ausgestaltung der Erfindung ist das Blechstanzteil mittels einer Scharnieranordnung schwenkbar an dem fahrzeugfesten Karosserieteil gehalten. Durch die schwenkbare Anordnung ist eine einfache Zugänglichkeit sowohl der Steuergeräte auf der Oberseite als auch der Steuergeräte auf der Unterseite des Blechstanzteiles gewährleistet. Dadurch wird insbesondere die erst nach der Montage des Blechstanzteiles im Kraftfahrzeug vorgenommene Verkabelung sowie ein nachträglicher Austausch der Steuergeräte vereinfacht.

In weiterer Ausgestaltung der Erfindung sind an den Aufnahmebereichen Befestigungs- oder Halteelemente in dem Blechstanzteil integriert. Dabei ist es insbesondere möglich, Befestigungsmuttern in das Blechstanzteil einzupressen, oder Gewindedurchzüge vorzusehen.

In weiterer Ausgestaltung der Erfindung ist das Blechstanzteil mit Versteifungswinkeln und -rippen versehen. Durch die fahrzeugfeste Anordnung des Blechstanzteiles an einem entsprechenden Karosserieteil des Kraftfahrzeugs kann es aufgrund seiner eigenen hohen Steifigkeit auch zur weiteren Versteifung der Fahrzeugkarosserie beitragen.

In weiterer Ausgestaltung der Erfindung ist das Blechstanzteil im Kraftfahrzeug in unmittelbarer Nähe eines fahrzeugfest verlegten Kabelkanales positionierbar. Dazu sind im Kraftfahrzeug an dem entsprechenden Karosserieteil geeignete Befestigungspunkte vorgesehen. Die Anordnung in der Nähe des Kabelkanales gewährleistet eine einfache Verkabelung und eine einfache Führung der Kabel.

In weiterer Ausgestaltung der Erfindung ist das Blechstanzteil unterhalb einer Fondsitzbank positionierbar. Dies ist eine Position, die einen genügend großen Einbauraum bietet und zudem eine stabile Befestigung an den benachbarten Karosserieteilen, insbesondere an einem Querträger der Karosserietragstruktur, gewährleistet.

In weiterer Ausgestaltung der Erfindung ist das Blechstanzteil aus einem Aluminiumblech gefertigt. Dadurch weist das Blechstanzteil ein geringes Gewicht auf.

Weitere Vorteile und Merkmale der Erfindung ergeben sich aus den Unteransprüchen. Nachfolgend ist ein bevorzugtes Ausführungsbeispiel der Erfindung beschrieben und anhand der Zeichnungen dargestellt.
- Fig. 1: zeigt in perspektivischer Darstellung die Anordnung einer Ausführungsform einer erfindungsgemäßen Vorrichtung zur fahrzeugfesten Halterung von Steuergeräten an einem Fahrzeugboden unterhalb einer Fondsitzbank,
- Fig. 2: ein Trägerbauteil der Vorrichtung in einer nach unten abgeklappten Position, und
- Fig. 3: das Trägerbauteil der Vorrichtung nach den Fig. 1 und 2 mit mehreren Steuergeräten, die an dem Trägerbauteil festlegbar sind.

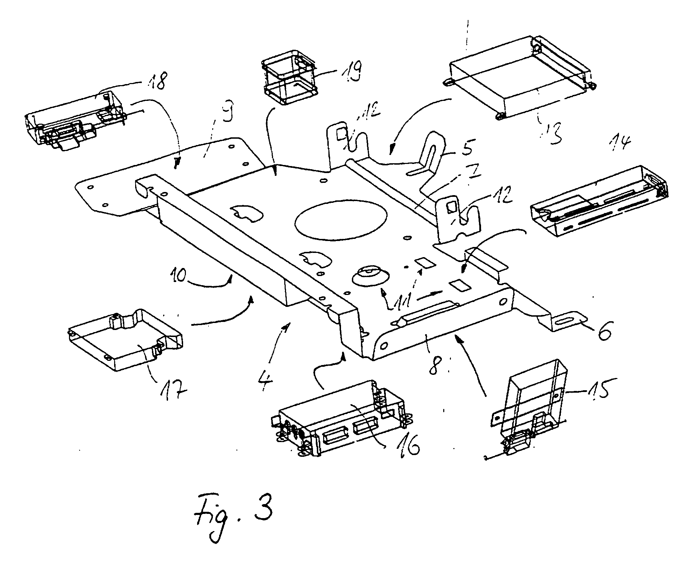

Eine Vorrichtung zur Halterung von elektronischen und elektrotechnischen Steuergeräten in einem Kraftfahrzeug weist als Trägerbauteil eine Trägerplatte 4 auf, die als Blechstanzteil aus einem Aluminiumblech einstückig hergestellt ist. Die Trägerplatte 4 weist zwei laschenartige Befestigungsflansche 5, 6 auf, mittels derer sie lösbar an einem Fahrzeugboden 1, 2 eines Personenkraftwagens festlegbar ist. Die Trägerplatte 4 ist an einem abgestuften Übergang des Fahrzeugbodens 1, 2 unterhalb einer nicht dargestellten Fondsitzbank befestigt. In ihrem am Fahrzeugboden 1, 2 festgelegten Zustand ist die Trägerplatte 4 horizontal ausgerichtet und ragt in Abstand zu dem unteren Fahrzeugbodenteil 1 von einer steil ausgerichteten Übergangswand zwischen dem unteren und dem oberen Fahrzeugbodenteil 1, 2 horizontal in Fahrzeuglängsrichtung nach vorne ab. Zur Befestigung der Trägerplatte 4 an dem Karosserieteil in Form des Fahrzeugbodens 1, 2 sind lösbare Schraubverbindungen vorgesehen. Die Trägerplatte 4 ist im wesentlichen flächig gestaltet und weist an ihren gegenüberliegenden Seiten einen nach oben abgestellten Haltewinkel 8 einerseits und andererseits einen nach unten abgestuften und schräg nach außen gestellten Aufnahmeflansch 9 auf. Sowohl an einer Oberseite 7 der Trägerplatte 4 als auch an einer lediglich angedeuteten Unterseite 10 der Trägerplatte 4 sind verschiedene Befestigungs- und Halteelemente 11, 12 vorgesehen, die jeweils einstückig in der Trägerplatte 4 integriert sind. Die Befestigungs- und Halteelemente sind in Aufnahmebereichen für verschiedene elektronische und elektrotechnische Steuergeräte 13 bis 19 (Fig. 3) positioniert und dienen zur lösbaren Festlegung dieser Steuergeräte 13 bis 19 an der Oberseite 7 und der Unterseite 10 sowie an dem seitlichen Haltewinkel 8 und dem gegenüberliegenden Aufnahmeflansch 9 der Trägerplatte 4. Die Befestigungselemente 11 können eingepreßte Befestigungsmuttern oder Gewindedurchzüge aufweisen, um das direkte Einschrauben entsprechender Schraubenelemente zur lösbaren Festlegung der Steuergeräte 13 bis 19 zu ermöglichen. Beim dargestellten Ausführungsbeispiel stellt das Steuergerät 13 eine Memoryeinheit zur elektrischen Sitzverstellung dar, das Steuergerät 14 ist ein Sender-Empfangsgerät und das Steuergerät 15 stellt eine Einheit zur Sprachbedienung eines bestimmten Funktionsbauteiles dar. Das Steuergerät 16 dient zur Steuerung einer Notrufeinrichtung. Das Steuergerät 17 dient zur Steuerung entsprechender Einparkhilfen und das Steuergerät 18 stellt ein beliebiges anderes Sondergerät dar. Das Steuergerät 19 ist ein Neigungsgeber, der insbesondere für eine Überrollbügelfunktion des Personenkraftwagens eingesetzt wird. Die Steuergeräte 13 und 14 sowie 19 werden beim dargestellten Ausführungsbeispiel auf der Oberseite 7 der Trägerplatte 4 montiert. Die Steuergeräte 16 und 17 werden auf der Unterseite 10 der Trägerplatte 4 befestigt. Das Steuergerät 15 wird am Haltewinkel 8 und das Steuergerät 18 auf dem Aufnahmeflansch 9 festgelegt. Durch die beschriebene Befestigung der verschiedenen Steuergeräte ist jedes Steuergerät 13 bis 19 für die Montage und Demontage in einfacher Weise separat zugänglich, da alle Steuergeräte 13 bis 19 jeweils auf einer Seite der Trägerplatte 4 nebeneinander angeordnet sind.

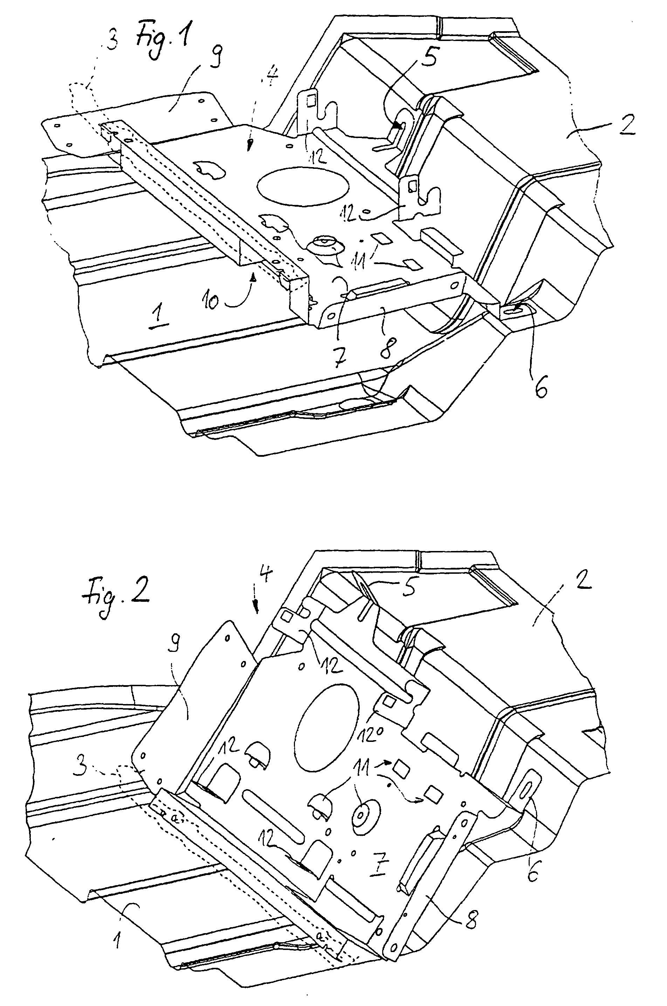

Die Trägerplatte 4 nach Fig. 2 entspricht im wesentlichen der Trägerplatte 4 nach den Fig. 1 und 3. Für alle identischen Teile der Trägerplatte 4 wurden die gleichen Bezugszeichen verwendet. Wesentlicher Unterschied zur Trägerplatte 4 ist jedoch die Art der Befestigung am Fahrzeugboden 1. An einer Vorderseite der Trägerplatte 4 ist ein lediglich gestrichelt dargestellter Querträgerflansch 3 derart mit der Trägerplatte 4 verbunden, daß die Trägerplatte 4 um die Längsachse des Querträgerflansches 3, d.h. quer zur Fahrzeuglängsrichtung, schwenkbeweglich gehalten ist. Der Querträgerflansch 3 ist am Fahrzeugboden 1 festgelegt. Die Trägerplatte 4 ist in ihrer Funktionsposition an die nach oben abgestufte Übergangswand des Fahrzeugbodens 1, 2 angelegt und ragt somit in Fahrzeuglängsrichtung schräg nach hinten und nach oben ab. In dieser Funktionsposition ist sie mittels nicht dargestellter Fixierungen arretiert. Um die Unterseite der Trägerplatte 4 zugänglich zu machen, kann die Trägerplatte 4 in einfacher Weise um die Längsachse des Querträgerflansches 3 nach vorne geschwenkt werden, wodurch entsprechende Steuergeräte an der Unterseite der Trägerplatte 4 montiert oder demontiert werden können.

Bei beiden Ausführungsbeispielen nach den Fig. 1 bis 3 ist die Trägerplatte 4 in unmittelbarer Nähe eines nicht dargestellten Kabelkanales angeordnet, so daß in einfacher Weise eine Kabelführung der Steuergeräte der Trägerplatte 4 zu dem Kabelkanal hin erfolgen kann. Die Verkabelung wird durch diese unmittelbare Anordnung der Trägerplatte 4 am Kabelkanal wesentlich vereinfacht.

Bei einem nicht dargestellten Ausführungsbeispiel der Erfindung ist die Trägerplatte 4 analog der Darstellung nach Fig. 1 horizontal ausgerichtet und ragt von der Übergangswand zwischen dem unteren Fahrzeugbodenteil 1 und dem oberen Fahrzeugbodenteil 2 ab. Bei diesem Ausführungsbeispiel ist die Trägerplatte 4 jedoch mittels einer Scharnieranordnung derart an der Übergangswand festgelegt, daß zwar eine horizontale Funktionsposition der Trägerplatte 4 erzielbar ist, daß die Trägerplatte 4 jedoch für die einfache Zugänglichkeit der Unterseite 10 der Trägerplatte 4 nach oben verschwenkt werden kann.

Um die Trägerplatte 4 für die Aufnahme zusätzlicher oder anderer Steuergeräte umzurüsten, ist aufgrund der flächigen Gestaltung der Trägerplatte die einfache Bearbeitung mittels entsprechender Biege- oder Schneidwerkzeuge möglich. Durch die einfache Bearbeitbarkeit und die daraus resultierende einfache Umrüstbarkeit können Sonderausstattungen bei Kraftfahrzeugen mit geringem Aufwand berücksichtigt werden, da in einfacher Weise zusätzliche Aufnahmebereiche oder die Abänderung bestehender Aufnahmebereiche an der Trägerplatte für entsprechende Steuergeräte erreicht werden können.

## Patentansprüche

1. Vorrichtung mit Steuergeräten (13 - 19) zur fahrzeugfesten Halterung dieser Steuergeräte (13 - 19) in einem Kraftfahrzeug und mit einem Trägerbauteil (4), das mit Aufnahmebereichen zur Positionierung und Festlegung mehrerer unterschiedlicher Steuergeräte (13 - 19) versehen ist, wobei
- das Trägerbauteil als im wesentlichen flächig gestaltetes, plattenförmiges und einstückiges Blechstanzteil (4) ausgebildet ist und
- die Aufnahmebereiche für die Steuergeräte (13 - 19) sowohl auf einer Oberseite (7) als auch auf einer Unterseite (10) des Trägerbauteiles (4) jeweils nebeneinander derart angeordnet sind, dass jeder Aufnahmebereich für ein Steuergerät (13 - 19) unabhängig von der Anordnung der weiteren Steuergeräte (13 - 19) zugänglich ist und, dass Steuergeräte (13, 14, 19) auf der Oberseite (7) des Trägerbauteiles (4) angeordnet und andere Steuergeräte (16, 17) auf der Unterseite (10) des Trägerbauteiles (4) angeordnet sind.

2. Vorrichtung nach Anspruch 1,
**dadurch gekennzeichnet,**
**daß** das Blechstanzteil (4) in horizontaler Ausrichtung an einem fahrzeugfesten Karosserieteil (1, 2) festlegbar ist.

3. Vorrichtung nach Anspruch 1 oder 2,
**dadurch gekennzeichnet,**
**daß** das Blechstanzteil (4) mittels einer Scharnieranordnung schwenkbar an einem fahrzeugfesten Karosserieteil (1, 2) gehalten werden kann.

4. Vorrichtung nach wenigstens einem der vorhergehenden Ansprüche,
**dadurch gekennzeichnet,**
**daß** an den Aufnahmebereichen Befestigungs- oder Halteelemente (11, 12) in das Blechstanzteil (4) integriert sind.

5. Vorrichtung nach Anspruch 4,
**dadurch gekennzeichnet,**
**daß** das Blechstanzteil (4) mit Versteifungswinkeln und -rippen versehen ist.

6. Vorrichtung nach wenigstens einem der vorhergehenden Ansprüche,
**dadurch gekennzeichnet,**
**daß** das Blechstanzteil (4) im Kraftfahrzeug in unmittelbarer Nähe eines fahrzeugfest verlegten Kabelkanales positionierbar ist.

7. Vorrichtung nach Anspruch 6,
**dadurch gekennzeichnet,**
**daß** das Blechstanzteil (4) unterhalb einer Fondsitzbank positionerbar ist.

8. Vorrichtung nach Anspruch 1,
**dadurch gekennzeichnet,**
**daß** das Blechstanzteil (4) aus einem Aluminiumblech gefertigt ist.

## Claims

1. Fixture with control devices (13 - 19) for a motor vehicle designed for mounting these control devices (13 - 19) in a permanently fixed arrangement on the vehicle and having a supporting component (4) provided with seating regions for positioning and fixing several different control devices (13 - 19), in which
- the supporting component is an essentially flat-structured, plate-shaped and integral piece punched from sheet metal (4) and
- the seating regions for the control devices (13 - 19) both on a top face (7) and on a bottom face (10) of the supporting component (4) are disposed respectively adjacent to one another in such a way that every seating region for a control device (13 - 19) is accessible irrespective of the layout of the other control devices (13 - 19) and some control devices (13, 14, 19) are mounted on the top face (7) of the supporting component (4) and other control devices (16, 17) are mounted on the bottom face (10) of the supporting component (4).

2. Fixture as claimed in claim 1,
**characterised in that**
the punched sheet metal piece (4) can be mounted in a horizontal orientation on a bodywork part (1, 2) permanently fixed to the vehicle.

3. Fixture as claimed in claim 1 or 2,
**characterised in that**
the punched sheet metal piece (4) can be retained on a bodywork part (1, 2) by means of a hinge arrangement so as to be pivotable.

4. Fixture as claimed in at least one of the preceding claims,
**characterised in that**
fixing or retaining elements (11, 12) are integrated in the punched sheet metal piece (4) at the seating regions.

5. Fixture as claimed in claim 4,
**characterised in that**
the punched sheet metal piece (4) is provided with rigidity-imparting corners and ribs.

6. Fixture as claimed in at least one of the preceding claims,
**characterised in that**
the punched sheet metal piece (4) can be positioned in the vehicle in the immediate vicinity of a cable duct permanently mounted on the vehicle.

7. Fixture as claimed in claim 6,
**characterised in that**
the punched sheet metal piece (4) can be positioned underneath a rear seat bench.

8. Fixture as claimed in claim 1,
**characterised in that**
the punched sheet metal piece (4) is made from aluminum sheet.

## Revendications

1. Dispositif doté d'unités de commande (13-19) pour le support fixe sur un véhicule de ces unités de commande (13-19) dans un véhicule automobile et avec un composant porteur (4) qui est muni de zones de réception pour le positionnement et la fixation de plusieurs unités de commande (13 - 19), moyennant quoi
- le composant porteur est réalisé comme pièce de tôle estampée (4) en un tenant, de forme essentiellement plate et en forme de plaque, et
- les zones de réception pour les unités de commande (13-19) sont disposées les unes à côté des autres aussi bien sur une face supérieure (7) que sur une face inférieure (10) du composant porteur (4) de telle sorte que pour chacune, chaque zone de réception prévue pour une unité de commande (13-19) soit accessible indépendamment de la disposition des autres unités de commande (13-19) et que des unités de commande (13, 14, 19) soient disposées sur la face supérieure (7) du composant porteur (4) et d'autres unités de commande (16, 17) soient disposées sur la face inférieure (10) du composant porteur (4).

2. Dispositif selon la revendication 1, **caractérisé en ce que** la pièce en tôle estampée (4) peut être fixée en direction horizontale sur une partie de carrosserie (1, 2) qui ne peut pas être détachée du véhicule.

3. Dispositif selon la revendication 1 ou 2, **caractérisé en ce que** la pièce en tôle estampée (4) peut être maintenue sur une partie de carrosserie (1, 2) qui ne peut pas être détachée du véhicule de façon pivotante au moyen d'un dispositif charnière.

4. Dispositif selon au moins l'une quelconque des revendications, **caractérisé en ce que** dans les zones de réception, des éléments de fixation ou de maintien (11, 12) sont intégrés dans la pièce de tôle estampée (4).

5. Dispositif selon la revendication 4, **caractérisé en ce que** la pièce en tôle estampée (4) est munie d'angles et de nervures de rigidité.

6. Dispositif selon au moins l'une quelconque des revendications précédentes, **caractérisé en ce que** la pièce en tôle estampée (4) peut être positionnée dans le véhicule à proximité directe d'un canal pour câble posé qui ne peut pas être détaché du véhicule.

7. Dispositif selon la revendication 6, **caractérisé en ce que** la pièce en tôle estampée (4) peut être positionnée en dessous d'une banquette de siège arrière.

8. Dispositif selon la revendication 1, **caractérisé en ce que** la pièce en tôle estampée (4) est fabriquée en tôle d'aluminium.
